# DEMANDE DE BREVET EUROPEEN

(11) **EP 4 474 205 A1**
(43) Date de publication de la demande: **11.12.2024**
(21) Numéro de dépôt: 24179007.0
(22) Date de dépôt: 30.05.2024
(51) Int. Cl.: B60L 53/24, B60L 15/00, B60L 53/12, B60L 55/00

(54) **CIRCUIT D'ALIMENTATION ÉLECTRIQUE D'UNE UNITÉ DE STOCKAGE D'ENERGIE ÉLECTRIQUE DE VÉHICULE**

(30) Priorité: 09.06.2023 FR 2305848
(71) Demandeur: Valeo eAutomotive Germany GmbH, 91056 Erlangen (DE)
(72) Inventeur: ALLALI, Nicolas, 95892 Cergy Pontoise (FR)
(74) Mandataire: Valeo Powertrain Systems

(57) **Abrégé**

Circuit de charge (1) comprenant :
- une cellule inductive (16) pour l'échange d'énergie sans contact,
- une unité de stockage d'énergie électrique (20),
- un onduleur/redresseur de tension (7) connecté à l'unité de stockage d'énergie (20) et apte à être connectés aux phases d'un moteur de véhicule électrique (8),
dans lequel,
la première borne de la cellule inductive (16) est connectée à un premier bras de commutation de l' onduleur/redresseur de tension (7),
la seconde borne de la cellule inductive (16) est connectée à un deuxième bras de commutation de l'onduleur/redresseur de tension (7).

## Description

La présente invention concerne un circuit d'alimentation électrique sans contact d'une unité de stockage d'énergie électrique de véhicule.

L'unité de stockage d'énergie électrique présente par exemple une tension nominale de 12V, 48V, 60V ou plus, par exemple supérieure à 300V, par exemple de 400V, 800V ou 1000V
Il est connu d'alimenter électriquement par transmission sans contact par couplage inductif une unité de stockage d'énergie électrique de véhicule, lorsque le véhicule est à l'arrêt ou lorsque celui-ci se déplace. Cette alimentation par transmission sans contact se fait alors au moyen de sous-circuits électriques distants couplés magnétiquement et accordés à la même fréquence de résonance. Les sous-circuits couplés magnétiquement mettent chacun en oeuvre une cellule résonante de type LC.

La solution connue consiste à appliquer une tension alternative aux bornes d'une cellule inductive primaire couplée par couplage inductif à une cellule inductive secondaire aux bornes de laquelle la tension alternative induite est redressée pour alimenter une unité de stockage d'énergie électrique, par exemple une batterie de véhicule électrique.

Dans la solution connue, un convertisseur DC/AC dédié au redressement de tension pour la charge de l'unité de stockage d'énergie électrique est nécessaire. Ce convertisseur DC/AC s'ajoute à celui déjà présent, encore appelé onduleur/redresseur, pour alimenter en tension alternative le stator de la machine électrique tournante servant à la propulsion du véhicule.

Il est alors nécessaire d'embarquer plusieurs convertisseurs DC/AC dans le véhicule, ce qui génère un encombrement, un surcoût et augmente le poids du véhicule.

Il existe un besoin pour remédier à tout ou partie des inconvénients précités.

L'invention répond à ce besoin, selon l'un de ses aspects, à l'aide d'un circuit électrique comprenant :
- une cellule inductive pour l'échange d'énergie sans contact,
- une unité de stockage d'énergie électrique,
- un onduleur/redresseur connecté à l'unité de stockage d'énergie et apte à être connecté aux phases d'un stator de machine électrique tournante de propulsion d'un véhicule, l'onduleur/redresseur comprenant un premier et un deuxième bras de commutation,
dans lequel,
la première borne de la cellule inductive est connectée au premier bras de commutation de l'onduleur/redresseur,
la seconde borne de la cellule inductive est connectée au deuxième bras de commutation de l'onduleur/redresseur.

La connexion entre une borne de la cellule inductive et un bras de commutation peut se faire, ou non, par l'intermédiaire de composants physiques interposés en série, par exemple via une inductance et un condensateur.

L'invention telle que définie ci-dessus permet, par la connexion des bornes de la cellule inductive aux bras de commutation de l'onduleur/redresseur connecté aux phases de la machine électrique tournante, d'utiliser cet onduleur/redresseur non seulement dans le cadre de la propulsion du véhicule pour alimenter en tension alternative le stator de la machine électrique tournante assurant en tout ou partie la propulsion du véhicule, mais aussi dans le cadre de la charge de l'unité de stockage d'énergie électrique pour redresser une tension alternative induite. On répond ainsi aux problèmes de poids, d'encombrement et de coût précités.

L'onduleur/redresseur, qui est par exemple triphasé, peut alors être disposé de manière à être :
- dans un premier chemin de puissance entre la cellule inductive et l'unité de stockage d'énergie électrique, et
- dans un deuxième chemin de puissance entre l'unité de stockage d'énergie électrique et le stator de la machine électrique tournante.

La charge de l'unité de stockage d'énergie électrique ne se produisant pas en même temps que la propulsion du véhicule, ces deux chemins de puissance ne sont pas simultanément actifs.

L'onduleur/redresseur peut comprendre:
- un premier bras de commutation, comprenant deux interrupteurs électroniques commandables en série de part et d'autre d'un premier point milieu,
- un deuxième bras de commutation, comprenant deux interrupteurs électroniques commandables en série de part et d'autre d'un deuxième point milieu,
- un troisième bras de commutation, comprenant deux interrupteurs électroniques commandables en série de part et d'autre d'un troisième point milieu,

les premier, deuxième, et troisième bras de commutation sont montés en parallèle,
l'onduleur/redresseur est apte à être connecté à un stator triphasé de la machine électrique tournante, les premier, deuxième et troisième points milieux étant aptes à être connecté respectivement aux différentes phases du stator,
la première borne de la cellule inductive est connectée au premier point milieu, et
la seconde borne de la cellule inductive est connectée au deuxième point milieu.

Les phases du stator sont dans ce cas connectées en étoile ou en triangle.

Les fréquences de commutation des premier, deuxième et troisième bras de commutation peuvent être différentes.

L'onduleur/redresseur est par exemple configuré pour réaliser une adaptation d'impédance, en faisant varier l'impédance équivalente entre le premier et le deuxième point milieu, indépendamment de l'impédance équivalente de la charge représentée par l'unité de stockage d'énergie électrique. Cette réalisation d'adaptation d'impédance par l'onduleur/redresseur est par exemple telle que décrite dans la demande FR 3 140 490 de la Demanderesse. Le contenu de cette demande est incorporé par référence à la présente demande, en ce qui concerne la façon de piloter deux bras de commutation entre les points milieux desquels une cellule inductive est montée pour réaliser l'adaptation d'impédance

Dans ce cas, l'un du premier et du deuxième bras de commutation peut commuter à la fréquence de l'énergie échangée sans contact, et l'autre du premier et du deuxième bras peut commuter à une fréquence plus élevée, par exemple égale ou supérieure à 5 fois ou 10 fois la fréquence d'échange de l'énergie sans contact.

Plus précisément, l'un des bras peut commuter à la fréquence de l'énergie échangée sans contact et avec un rapport cyclique de 50%, et l'autre bras peut commuter à une fréquence supérieure à celle de l'énergie échangée sans contact, par exemple à une fréquence égale ou supérieure à 5 fois ou 10 fois la fréquence de l'énergie échangée sans contact, et avec un rapport cyclique modulé selon le courant alternatif circulant dans la cellule inductive et la tension sur l'entrée alternative de cet onduleur/redresseur

L'onduleur/redresseur est par exemple configuré, lors de la propulsion du véhicule, pour que ses trois bras de commutation commutent à la même fréquence.

L'une au moins des bornes de la cellule inductive peut être connectée à un bras de commutation de l'onduleur/redresseur par un interrupteur. Cet interrupteur peut par exemple comprendre un transistor.

Avantageusement, la présence de cet interrupteur permet d'isoler l'unité de stockage d'énergie électrique de l'onduleur/redresseur lorsque ce dernier alimente électriquement le stator de la machine électrique tournante. On améliore ainsi la sécurité dans le circuit.

Chaque borne de la cellule inductive est par exemple connectée à un bras de commutation de l'onduleur/redresseur par un interrupteur.

Le circuit peut comprendre au moins un interrupteur par lequel un bras de commutation de l'onduleur est apte à être connecté à une phase du stator de la machine électrique tournante.

Le circuit comprend par exemple, pour chaque bras de commutation auquel une borne de la cellule inductive est connectée, un interrupteur par lequel ce bras de commutation de l'onduleur/redresseur est apte à être connecté à une phase du stator de la machine électrique tournante. Cette variante est une autre façon d'isoler l'unité de stockage d'énergie électrique du stator de la machine électrique tournante, et donc d'améliorer la sécurité dans le circuit électrique.

Le cas échéant, un convertisseur DC/DC peut être monté en série entre l'unité de stockage électrique et l'onduleur/redresseur.

L'unité de stockage d'énergie électrique peut avoir une tension supérieure ou égale à 60 volts. Typiquement, l'unité de stockage d'énergie électrique peut être une batterie de type lithium-ion. Cette batterie a par exemple une tension nominale de 12V, 48V, 60V ou plus, par exemple supérieure à 300V, par exemple de 400V, 800V ou 1000V

L'échange sans contact par couplage inductif d'énergie électrique se fait par exemple à une fréquence inférieure à 10kHz, notamment inférieure à 7kHz, notamment inférieure à 5 kHz, par exemple inférieure à 3kHz, ou encore inférieure à 2kHz ou 1kHz, notamment encore sensiblement égale à 400 Hz ou 50 Hz.

Comme déjà mentionné, l'onduleur/redresseur peut permettre, lors de la charge de l'unité de stockage d'énergie électrique, de réaliser une adaptation d'impédance, en :
- commandant un premier bras de commutation en commutation à la fréquence du transfert d'énergie sans contact, et
- commandant un deuxième bras de commutation en commutation à une fréquence égale à plusieurs fois celle de la fréquence du transfert d'énergie sans contact,

L'invention concerne également un circuit d'alimentation électrique d'une unité de stockage d'énergie électrique, ce circuit d'alimentation électrique comprenant :
- un premier circuit dit « circuit primaire » et
- un second circuit dit « circuit secondaire », correspondant au circuit défini ci-dessus,
le circuit primaire étant apte à être connecté à un réseau de tension et comprenant :
- un onduleur/redresseur primaire, apte à être connecté au réseau de tension, le cas échéant par l'intermédiaire d'un autre onduleur/redresseur primaire, et
- une cellule inductive primaire pour l'échange d'énergie sans contact,
les circuit primaire et secondaire étant configurés pour échanger de l'énergie sans contact via les cellules inductives.

Chacun du circuit primaire et du circuit secondaire peut comprendre une unité de contrôle configurée pour contrôler la fréquence de commutation des bras de commutation.

En variante, une seule unité de contrôle, par exemple un circuit de traitement numérique, peut être prévue, cette unité de contrôle commandant les bras de commutation du circuit primaire et du circuit secondaire.

En variante encore, l'unité de contrôle est commune au circuit primaire et au circuit secondaire, et elle comprend un module de commande du circuit primaire et un module de commande du circuit secondaire.

Le circuit primaire peut comprendre un condensateur ayant une première borne connectée à une borne de la cellule inductive et une deuxième borne connectée à l'onduleur/redresseur primaire.

Le réseau électrique fournit par exemple une tension efficace nominale de 230V ou de 110V avec une fréquence de 50 Hz ou 60 Hz. Le réseau électrique est par exemple monophasé.

Le réseau électrique est par exemple un réseau électrique régional ou national. En variante, il peut s'agir d'un réseau local indépendant, comprenant par exemple une ou plusieurs batteries alimentées par des sources d'énergie telles que éoliennes, des panneaux solaires, des piles à combustible ou des générateurs d'hydroélectricité.

Afin de permettre un échange d'énergie électrique sans contact entre le circuit primaire et le circuit secondaire, la cellule inductive du circuit primaire et la cellule inductive du circuit secondaire sont configurées de manière à échanger sans contact par couplage inductif de l'énergie électrique.

La cellule inductive primaire peut comprendre une bobine permettant la génération d'énergie magnétique et la cellule inductive secondaire peut comprendre une bobine permettant de récupérer l'énergie magnétique issue de la cellule inductive primaire.

Comme déjà mentionné, l'échange sans contact par couplage inductif d'énergie électrique peut se faire à une fréquence inférieure à 10kHz, notamment inférieure à 7kHz, notamment inférieure à 5 kHz, par exemple inférieure à 3kHz, ou encore inférieure à 2kHz ou 1kHz, notamment encore sensiblement égale à 400 Hz ou 50 Hz.

La cellule inductive primaire et la cellule inductive secondaire peuvent présenter une même fréquence de résonance et l'échange sans contact par couplage inductif d'énergie électrique peut se faire à cette fréquence de résonance.

Dans tout ce qui précède, les unités de contrôle peuvent être configurées pour commander les différents bras de commutation de manière à réaliser sélectivement :
- une charge de l'unité de stockage d'énergie électrique depuis le réseau de tension, ou
- une charge du réseau de tension depuis l'unité de stockage d'énergie électrique.

Ainsi, en fonction du besoin, l'échange d'énergie électrique peut s'effectuer dans un sens ou dans l'autre.

Dans tout ce qui précède, chaque interrupteur électronique commandable est par exemple un transistor, par exemple bipolaire, MOS ou IGBT, ou un thyristor. Chaque interrupteur électronique commandable est par exemple bidirectionnel.

Dans tout ce qui précède, chaque unité de contrôle peut être un circuit de traitement numérique, par exemple un circuit intégré de type ASIC (« Application-specific integrated circuit » en anglais) ou un microcontrôleur.

L'invention a encore pour objet, selon un autre de ses aspects, un circuit électrique destiné à être embarqué sur un véhicule, comprenant :
- une cellule inductive pour l'échange d'énergie sans contact,
- une unité de stockage d'énergie électrique,
- une machine électrique tournante de propulsion, et
- un unique onduleur/redresseur, comprenant au moins deux bras de commutation, chacun des deux bras de commutation étant connecté à la cellule inductive et à une phase au moins du stator de la machine électrique tournante pour permettre alternativement la charge de l'unité de stockage d'énergie électrique par redressement de la tension induite aux bornes de la cellule inductive et l'alimentation du stator de la machine électrique tournante.

Tout ce qui précède s'applique encore à cet autre aspect de l'invention.

La connexion d'un bras de commutation à une phase du stator et à la cellule inductive se fait par exemple via un point milieu de ce bras de commutation.

Au moins un interrupteur peut être présent entre le bras de commutation et la cellule inductive ou entre le bras de commutation et la phase du stator.

Un tel circuit peut constituer un circuit secondaire, similairement à ce qui a été décrit précédemment, et être associé au circuit primaire décrit précédemment.

Similairement à ce qui a déjà été mentionné, l' onduleur/redresseur unique peut permettre, lors de la charge de l'unité de stockage d'énergie électrique, de réaliser une adaptation d'impédance, comme décrit ci-dessus.

L'invention a encore pour objet, selon un autre de ses aspects, un composant pour l'alimentation électrique d'une unité de stockage d'énergie électrique, comprenant le circuit électrique selon l'un quelconque des aspects ci-dessus, le composant définissant notamment une structure supportant de manière rigidement couplés entre eux le circuit primaire et le circuit secondaire. Un tel composant est couramment appelé « chargeur embarqué » (« on board charger » en anglais). Ce composant est apte à être embarqué dans un véhicule hybride ou électrique.

L'invention a encore pour objet, selon un autre de ses aspects, un dispositif pour l'alimentation électrique d'une unité de stockage d'énergie électrique, comprenant :
- une borne de charge pour véhicule hybride ou électrique, dans laquelle est disposé le circuit primaire du circuit électrique tel que défini ci-dessus ou à laquelle ce circuit primaire est connecté, et
- un composant apte à être embarqué dans un véhicule hybride ou électrique, dans lequel est disposé le circuit secondaire du circuit électrique tel que défini ci-dessus.

Cette borne reçoit alors de l'énergie électrique d'un réseau électrique via un câble qui peut être un câble monophasé ou un câble triphasé. Dans ce cas, le circuit primaire et le circuit secondaire ne sont pas intégrés à un même composant physique.

Le véhicule auquel appartient l'unité de stockage d'énergie électrique est par exemple un véhicule électrique ou hybride.

L'invention pourra être mieux comprise à la lecture de la description qui va suivre d'un exemple non-limitatif de mise en oeuvre de celle-ci et à l'examen du dessin annexé sur lequel :
[Fig.1] représente de façon schématique une partie d'un circuit d'alimentation électrique d'une unité de stockage d'énergie électrique, selon un premier exemple de mise en oeuvre de l'invention, et
[Fig. 2] représente de façon schématique le circuit d'alimentation électrique incluant ce qui est représenté sur la figure 1.

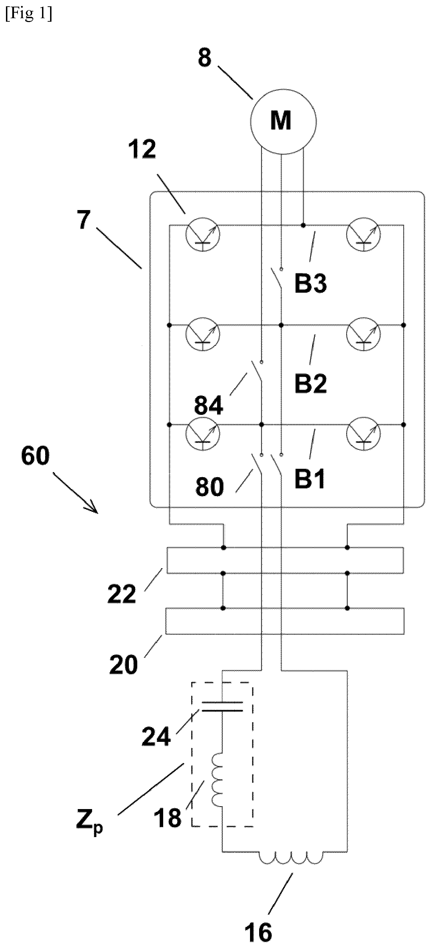

On a représenté sur la figure 1, un circuit 60 comprenant :
- une cellule inductive 16 pour l'échange d'énergie sans contact,
- une unité de stockage d'énergie électrique 20,
- un onduleur/redresseur 7 connecté à l'unité de stockage d'énergie 20 et aux phases d'un stator 8 d'une machine électrique tournante de propulsion, par exemple de véhicule électrique.

La première borne de la cellule inductive 16 est connectée à un premier bras de commutation de l'onduleur/redresseur 7,

La seconde borne de la cellule inductive 16 est connectée à un deuxième bras de commutation de l'onduleur/redresseur 7.

Dans l'exemple décrit, entre les premier et deuxième bras de commutation de l'onduleur /redresseur 7 sont montées en série une impédance de valeur Zp et la cellule inductive 16. L'impédance de valeur Zp comprend en série une inductance 18 et un condensateur 24.

Le circuit 60 de la figure 1, encore appelé « circuit secondaire » est intégré au circuit d'alimentation électrique de l'unité de stockage d'énergie électrique 20.

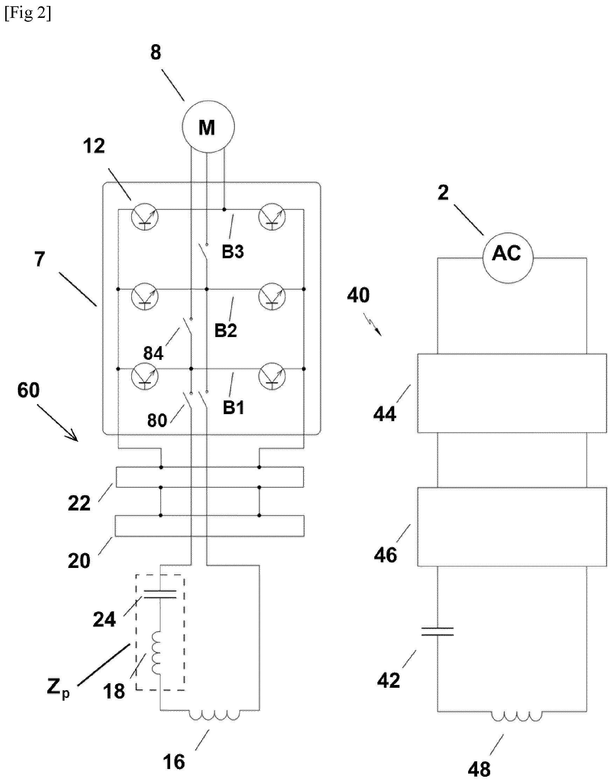

Comme représenté sur la figure 2, le circuit secondaire 60 peut être configuré pour échanger de l'énergie sans contact avec un circuit primaire 40.

Comme représenté sur la figure 2, le circuit primaire 40 est connecté à un réseau de tension 2et comprend :
- un premier onduleur/redresseur primaire 44 et un deuxième onduleur/redresseur primaire 46 connectés en série, le premier onduleur/ redresseur primaire 44 étant connecté au réseau de tension 2,
- une cellule inductive primaire 48 pour l'échange d'énergie sans contact, et
- un condensateur 42.

Le condensateur 42 est connecté à une première borne de la cellule inductive primaire 48 et au deuxième onduleur/redresseur primaire 46. La seconde borne de la cellule inductive primaire 48 est connectée au deuxième onduleur/redresseur primaire 46.

Le circuit secondaire 60 comprend, comme déjà mentionné, une cellule inductive secondaire 16 pour l'échange d'énergie sans contact, une unité de stockage d'énergie électrique 20, et un onduleur/redresseur secondaire 7 connecté à l'unité de stockage d'énergie 20 et aux phases du stator de la machine électrique tournante 8.

Les circuit primaire et secondaire sont configurés pour échanger de l'énergie sans contact via les cellules inductives.

Le circuit d'alimentation électrique met en oeuvre un échange d'énergie électrique sans contact par couplage inductif entre le circuit primaire 40 et le circuit secondaire 60, pour la charge de l'unité de stockage d'énergie électrique 20.

Dans l'exemple considéré, l'onduleur/redresseur de tension secondaire 7 est unique, et il comprend :
- un premier bras de commutation B1, comprenant deux interrupteurs électroniques commandables 12 en série de part et d'autre d'un premier point milieu,
- un deuxième bras de commutation B2, comprenant deux interrupteurs électroniques commandables 12 en série de part et d'autre d'un deuxième point milieu, et
- un troisième bras de commutation B3, comprenant deux interrupteurs électroniques commandables 12 en série de part et d'autre d'un troisième point milieu.

Chaque interrupteur électronique commandable comprend par exemple un transistor MOS, IGBT ou bipolaire, ou un thyristor.

Les premier B1, deuxième B2, et troisième B3 bras de commutation sont montés en parallèle, et les premier, deuxième et troisième points milieux sont connectés respectivement aux différentes phases du stator de la machine électrique tournante 8.

La première borne de la cellule inductive secondaire 16 est connectée au premier point milieu, et la seconde borne de la cellule inductive secondaire 16 est connectée au deuxième point milieu.

La cellule inductive primaire 48 comprend par exemple une bobine permettant la génération d'énergie magnétique et la cellule inductive secondaire 16 comprend par exemple une bobine permettant de récupérer l'énergie magnétique issue de la cellule inductive primaire par couplage magnétique.

Le réseau de tension 2 fournit par exemple une tension efficace nominale de 230V ou 110 V, avec une fréquence de 50 Hz ou 60 Hz. Le réseau de tension 2 est ici monophasé, de sorte que la tension aux bornes de l'onduleur/redresseur de tension secondaire 7 est aussi monophasée.

Dans l'exemple considéré, les fréquences de commutation des premier B1, deuxième B2 et troisième B3 bras de commutation peuvent être différentes lors de la charge de l'unité de stockage d'énergie électrique 20. La fréquence de commutation utilisée sur l'un des bras de commutation B1 et B2 du circuit secondaire 60 est par exemple supérieure à la fréquence de transmission de puissance, par exemple au moins 5 fois supérieure, tandis que l'autre des bras de commutation B1 et B2 commute à la fréquence de transmission de puissance.

L'unité de stockage d'énergie électrique est par exemple connectée à l'onduleur/redresseur secondaire 7 par un convertisseur DC/DC 22.

Le convertisseur DC/DC 22 est par exemple monté en parallèle de ces trois bras B1, B2 et B3.

L'invention a été décrite ci-dessus avec l'aide de modes de réalisations présentés sur la figure, sans limitation du concept inventif général.

Bien d'autres modifications et variations se suggèrent d'elles-mêmes à l'homme du métier, après réflexion sur les différents modes de réalisations illustrés dans cette demande.

Ces modes de réalisation sont donnés à titre d'exemple et ne sont pas destinés à limiter la portée de l'invention, qui est déterminée exclusivement par les revendications ci-dessous.

Dans les revendications, le mot « comprenant » n'exclut pas d'autres éléments ou étapes.

Le simple fait que différentes caractéristiques sont énumérées en revendications mutuellement dépendantes n'indique pas qu'une combinaison de ces caractéristiques ne puisse être avantageusement utilisée. Enfin, toute référence utilisée dans les revendications ne doit pas être interprétée comme une limitation de la portée de l'invention.

## Revendications

1. Circuit comprenant :
- une cellule inductive (16) pour l'échange d'énergie sans contact,
- une unité de stockage d'énergie électrique (20),
- un onduleur/redresseur (7) connecté à l'unité de stockage d'énergie électrique (20) et apte à être connecté aux phases d'un stator de machine électrique tournante (8), l'onduleur/redresseur (7) comprenant un premier (B1) et un deuxième (B2) bras de commutation,
dans lequel,
la première borne de la cellule inductive (16) est connectée au premier bras de commutation de l'onduleur/redresseur (7), et la seconde borne de la cellule inductive (16) est connectée au deuxième bras de commutation de l'onduleur/redresseur de tension (7).

2. Circuit selon la revendication 1, dans lequel l'onduleur/redresseur (7) comprend :
- un premier bras de commutation (B1), comprenant deux interrupteurs électroniques commandables (12) en série de part et d'autre d'un premier point milieu,
- un deuxième bras de commutation (B2), comprenant deux interrupteurs électroniques commandables (12) en série de part et d'autre d'un deuxième point milieu,
- un troisième bras de commutation (B3), comprenant deux interrupteurs électroniques commandables (12) en série de part et d'autre d'un troisième point milieu,
les premier (B1), deuxième (B2), et troisième (B3) bras de commutation étant montés en parallèle, l'onduleur/redresseur (7) étant apte à être connecté à un stator triphasé de machine électrique tournante (8), les premier, deuxième et troisième points milieux étant aptes à être connecté respectivement aux différentes phases du stator,
la première borne de la cellule inductive (16) étant connectée au premier point milieu, et la seconde borne de la cellule inductive (16) étant connectée au deuxième point milieu.

3. Circuit selon la revendication précédente, l'onduleur/redresseur (7) étant configuré pour réaliser une adaptation d'impédance, en faisant varier l'impédance équivalente entre le premier et le deuxième point milieu, indépendamment de l'impédance équivalente de la charge représentée par l'unité de stockage d'énergie électrique.

4. Circuit selon la revendication 3, l'un des premier et deuxième bras de commutation commutant à la fréquence de l'énergie échangée sans contact et avec un rapport cyclique de 50%, et l'autre de ces premier et deuxième bras commutant à une fréquence supérieure à celle de l'énergie échangée sans contact, notamment à une fréquence égale ou supérieure à 5 fois ou 10 fois la fréquence de l'énergie échangée sans contact, et avec un rapport cyclique modulé selon le courant alternatif circulant dans la cellule inductive et la tension sur l'entrée alternative de cet onduleur/redresseur

5. Circuit selon l'une des revendications précédentes, dans lequel au moins une borne de la cellule inductive (16) est connectée à un bras de commutation de l'onduleur/redresseur (7) par un interrupteur (80).

6. Circuit selon l'une quelconque des revendications précédentes, comprenant un interrupteur (84) par lequel au moins un bras de commutation de l'onduleur est apte à être connecté à au moins une phase du stator de la machine électrique tournante (8).

7. Circuit selon l'une quelconque des revendications précédentes, dans lequel l'unité de stockage d'énergie électrique (20) est connectée à l'onduleur/redresseur de tension (7) par un convertisseur DC/DC (22).

8. Circuit d'alimentation électrique d'une unité de stockage d'énergie électrique (20), ce circuit d'alimentation électrique comprenant :
- un premier circuit (40) dit « circuit primaire » et
- un second circuit (60) selon l'une quelconque des revendications précédentes, dit « circuit secondaire »,
le circuit primaire (40) étant apte à être connecté à un réseau de tension (2) et comprenant :
- un onduleur/redresseur primaire (44) apte à être connecté au réseau de tension (2) le cas échéant via un autre onduleur/redresseur primaire (46), et
- une cellule inductive primaire pour l'échange d'énergie sans contact (48),
les circuit primaire et secondaire étant configurés pour échanger de l'énergie sans contact via les cellules inductives.

9. Circuit l'alimentation électrique selon la revendication précédente, dans lequel le circuit primaire et le circuit secondaire sont configurés de sorte que la fréquence de transmission de puissance électrique par induction est inférieure ou égale à 10kHz, notamment à 7kHz, notamment à 5kHz.

10. Circuit électrique (60) destiné à être embarqué sur un véhicule, comprenant :
- une cellule inductive (16) pour l'échange d'énergie sans contact,
- une unité de stockage d'énergie électrique (20),
- une machine électrique tournante de propulsion (8), et
- un unique onduleur/redresseur (7), comprenant au moins deux bras de commutation (B 1, B2, B3), chacun des deux bras de commutation étant connecté à la cellule inductive (16) et à une phase au moins du stator de la machine électrique tournante pour permettre alternativement : la charge de l'unité de stockage d'énergie électrique (20) par redressement de la tension induite aux bornes de la cellule inductive (16), et l'alimentation du stator de la machine électrique tournante (8).

11. Dispositif pour l'alimentation électrique d'une unité de stockage d'énergie électrique, comprenant :
- une borne de charge pour véhicule hybride ou électrique, dans laquelle est disposé un circuit dit « circuit primaire » apte à être connecté à un réseau de tension (2), comprenant :
- un onduleur/redresseur primaire (44) apte à être connecté au réseau de tension (2),
- une cellule inductive primaire pour l'échange d'énergie sans contact (48) ; et
- un composant apte à être embarqué dans un véhicule hybride ou électrique, dans lequel est disposé un circuit dit « circuit secondaire » selon l'une quelconque des revendications 1 à 7 ou selon la revendication 10,
les circuit primaire et secondaire étant configurés pour échanger de l'énergie sans contact via les cellules inductives.
